# EUROPÄISCHE PATENTSCHRIFT

(11) **EP 1 674 391 B1**
(45) Veröffentlichungstag und Bekanntmachung des Hinweises auf die Patenterteilung: **18.04.2007**
(21) Anmeldenummer: 05024049.8
(22) Anmeldetag: 04.11.2005
(51) Int. Cl.: B64G 1/64

(54) **Auswurfvorrichtung für drallstabilisierte Behälter**
Ejector for spin-stabilised containers
Ejecteur pour réservoirs stabilisés par rotation

(30) Priorität: 23.12.2004 DE 102004063115
(43) Veröffentlichungstag der Anmeldung: 28.06.2006
(73) Patentinhaber: Astrium GmbH, 85521 Ottobrunn (DE)
(72) Erfinder: Köhler, Horst, 28279 Bremen (DE)
(74) Vertreter: Hansmann, Dierk

(56) Entgegenhaltungen:
- US-A- 4 067 308
- US-A- 5 253 827

## Beschreibung

Die Erfindung betrifft eine Vorrichtung zum Auswurf von drallstabilisierten, in etwa zylindrisch ausgebildeten Behältern aus einem Raumflugkörper, wobei der auszustoßende Behälter über eine im Raumflugkörper anordbare Antriebseinheit in eine kombinierte Rotations- und Translationsbewegung versetzt wird und wobei Mittel zum Haltern und zum Führen des auszustoßenden Behälters vorgesehen sind.

Um Versuchsproben von einer Raumstation, beispielsweise der International Space Station, ISS, auf die Erde zurückzubringen, stehen derzeit praktisch nur die als Space Shuttle bezeichneten Raumtransporter zur Verfügung. Für Versorgungsflüge von der Erde zur ISS können darüber hinaus auch Raketen, wie das ARIANE Transfer Vehicle, ATV, und die russische Progress Kapsel, eingesetzt werden.

Durch eine Erweiterung des ATV bzw. der Progresskapsel um einen Nutzlast-Rückkehrbehälter besteht die Möglichkeit, unabhängig vom Space Shuttle Versuchsproben auf die Erde zurück zu transportieren.

Dabei wird der Rückkehrbehälter in der Ladeluke des ATV oder Progresskapsel montiert und, bevor das ATV bzw. die Progresskapsel in die Erdatmosphäre eintritt und verglüht, aus diesem ausgeworfen. Der Behälter selbst ist dabei mit einem Hitzeschutzschild ausgestattet, das den unbeschadeten wiedereintritt in die Erdatmosphäre ermöglicht.

Ein derartiger Rückkehrbehälter soll in der Lage sein, Versuchsproben bis zu einer Masse von 360 kg auf die Erde zurückzuführen. Um diesen bei der Rückkehr zuverlässig aus dem Transportvehikel auszustoßen, wird eine Auswurfvorrichtung benötigt, die dem Behälter eine translatorische Geschwindigkeit in der Größenordnung von etwa 1 m/s zu verleihen vermag. Ferner muß sie, zur Stabilisierung, dem Behälter einen Drehimpuls um seine Längsachse vermitteln.

In der Vergangenheit wurde eine Reihe von Auswurfvorrichtungen für Raumflugkörper aus Satelliten entwickelt, so zum Beispiel zur Anwendung in Spionagesatelliten zum Ausstoß von Rückkehrkapseln mit belichteten Filmen. Bei diesen Anwendungen waren die Masse und Dimensionen der ausgestoßenen Subkörper vergleichsweise gering. Weitere Vorrichtungen wurden für die Aussetzung von drehachsen- oder spinstablisierten Kommunikationssatelliten oder von Kleinsatelliten aus dem Space Shuttle entwickelt. Bei ersteren handelt es sich um Flugkörper mit deutlich größeren Dimensionen, beispielsweise mit Durchmessern größer als 2,5 Metern, und mit einer vergleichsweise hohen Masse, bei letzteren um Flugkörper mit geringerer Dimension und kleinerer Masse. Ähnliche Vorrichtungen sind auch bereits für Wiedereintrittskapseln mit mittleren Dimensionen vorgeschlagen geworden.

Ferner ist nach der US 3,333,788 A eine Vorrichtung bekannt, bei der zwei rotierende Körper getrennt wurden. Die beiden Körper sind dabei durch acht Kabel verbunden, welche von einer motorgetriebenen Scheibe ab- beziehungsweise aufgewickelt werden.

Weiterhin ist nach der US 4 067 308 A ein drallstabilisierter Behälter bekannt, der in einem Gehäuse angeordnet und über Feder ausstoßbar ist. Auch nach der US 5 253 827 A ist eine Ausstoßvorrichtung über ein vertikales Führungssystem zur Führung bekannt, wobei über einen Kettenantrieb ein Ausstoß erfolgt.

Ein wesentlicher Nachteil der bisher bekannt gewordenen Ausstoßvorrichtungen liegt in ihrem verhältnismäßig hohen Gewicht und ihrem komplexen Aufbau, der zu Fehlfunktionen führen kann.

Der Erfindung liegt die Aufgabe zugrunde, eine Ausstoßvorrichtung der eingangs genannten Art so auszubilden, daß sie inhärent funktionssicher, zudem leicht und zuverlässig ist und den auszustoßenden Flugkörper in eine vorab exakt festlegbare Kombination aus Translations- und Rotationsbewegung zu versetzen vermag.

Diese Aufgabe wird durch die kennzeichnenden Merkmale des Anspruches 1 gelöst.

Die erfindungsgemäße Vorrichtung verwendet als Drehantrieb eine Dreh- oder Spiralfeder und kombiniert die Erzeugung der Rotationsbewegung zur Spinstabilisierung des auszustoßenden Behälters mit der für den Ausstoßvorgang erforderlichen Translationsbewegung dadurch, daß in einem als Haltering dienenden Ringelement eine zentrale Seilrolle montiert ist, die durch die Spiralfeder in Bewegung versetzt werden kann, wobei durch das Rotieren der Seilrolle die Rotationsbewegung über Mitnehmer auf den auszustoßenden Behälter übertragen wird. Nach dem Einbringen des Behälters in die Halterung der Auswurfvorrichtung liegt der Behälter auf diesem als Haltering dienenden Ringelement auf. Durch das gleichzeitige Aufrollen der Zugseile wird der Haltering ferner zusammen mit dem Behälter zugleich in eine translatorische Bewegung versetzt, so daß die gewünschte Kombination aus Rotations- und Translationsbewegung des Behälters bei dessen Ausstoßvorgang erzielt wird.

Diese Ausbildung der Vorrichtung gemäß der Erfindung bietet eine Reihe von Vorteilen, zu deren wesentlichen die Vermeidung von Explosivstoffen in einem Raumfahrzeug und damit Eliminierung eines erheblichen Gefährdungspotentials für die Astronauten ebenso gehören wie die Minimierung von Gewicht und Volumen der Mechanik für die Drallstabilisierung sowie für den Auswurf und damit die Minimierung der Gesamtmasse des Raumflugsystem bzw. die Maximierung der verfügbaren Nutzlastmasse und des Nutzlastvolumens. Weitere Vorteile liegen in der Reduzierung der Komplexität des Auswurfmechanismus durch eine Verringerung der Anzahl der erforderlichen mechanischen und elektrischen Funktionsteile und damit einhergehend in der Maximierung der Zuverlässigkeit und der Effizienz der Anordnung. Dabei bedarf der Ausstoßvorgang aufgrund der gemäß der Erfindung vorgesehenen Verwendung von Drehfedern als Antriebselementen zudem keiner elektrischen Energie seitens des ausstoßenden Raumflugkörpers oder des Behälters, wodurch spezielle Anforderungen an eine Starkstromversorgung des Behälters bzw. des Ausstoßmechnismus im Raumflugkörper vermieden werden.

Nachfolgend soll die Erfindung anhand eines in der Zeichnung dargestellten Ausführungsbeispiels näher erläutert werden. Es zeigen
- Fig. 1: eine Gesamtanordnung einer Auswurfvorrichtung in gespanntem Zustand, jedoch ohne einen in deren Inneren anzuordnenden auszustoßenden Behälter,
- Fig. 2: eine Detaildarstellung der Anordnung gemäß Fig. 1,
- Fig. 3: eine Explosionsdarstellung der Anordnung gemäß Fig. 2,
- Fig. 4: die Anordnung gemäß Fig. 1 nach dem Einbringen eines auszustoßenden Behälters,
- Fig. 5: die Anordnung gemäß Fig. 1 während des Starts eines auszustoßenden Behälters und
- Fig. 6: die Anordnung gemäß Fig. 1 unmittelbar nach dem Start eines auszustoßenden Behälters.

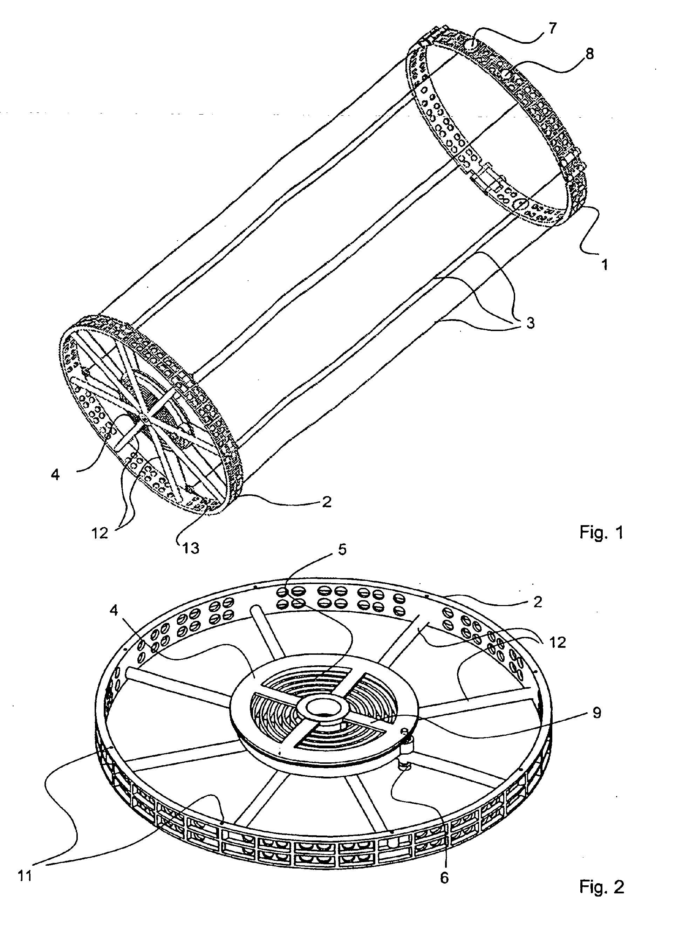

Die in Fig. 1 dargestellte Auswurfvorrichtung besteht im wesentlichen aus einem ersten und einem zweiten Ringelement 1, 2 sowie aus einer Anzahl, im vorliegenden Fall insgesamt acht, zwischen den beiden Ringelementen 1 und 2 angeordneten Zugseilen 3. Diese als Drahtseile ausgebildeten zugseile 3 sind jeweils an einem Ende fest mit dem ersten, auch als Hauptring zu bezeichnenden Ringelement 1 verbunden, während ihre jeweils anderen Enden an Spulen oder Seilrollen 4 befestigt sind, die ihrerseits am zweiten Ringelement 2 angeordnet sind. Die Seilrollen 4 sind äquidistant über den Umfang des zweiten Ringelementes 2 verteilt angeordnet und werden über innen liegende Dreh- oder Spiralfedern 5 beaufschlagt, die jeweils durch einen Sperrstift 6 festgesetzt werden können. Weiterhin sind am zweiten Ringelement 2 eine Reihe von elektrisch beaufschlagbaren Hubmagneten 7 vorgesehen, die, ebenso wie als Führungselemente dienende Kugelrollen 8, über den Umfang des ersten Ringelementes 1 verteilt angeordnet sind, wobei im Fall des hier dargestellten Ausführungsbeispiels je zwei Hubmagnete 7 und Kugelrollen 8 vorgesehen sind.

Vervollständigt wird die in den Figuren 1 bis 3 dargestellte Anordnung durch eine Anzahl von, im vorliegenden Fall vier, Mitnehmerelementen 9, die speichenförmig an der Seilrolle 4 vorgesehen sind und die mit entsprechenden, in der Zeichnung nicht dargestellten Aufnahmen im Boden des auszuwerfenden Behälters 10 in Eingriff bringbar sind. Ferner sind in Ösen 11 des zweiten Ringelementes 2 Umlenkrollen 13 für die Seile 3 gehaltert.

Der Flugkörper 10 weist eine im wesentlichen zylindrische Grundform auf, wobei sein in Flugrichtung gesehen vorderer Endbereich im Fall des hier dargestellten Ausführungsbeispiels leicht erweitert ausgebildet ist. Der Außendurchmesser des zylindrischen Teiles des Flugkörpers 10 ist so gewählt, daß er im wesentlichen dem Innendurchmesser der Ringelelmente 1 und 2 entspricht bzw. geringfügig kleiner als dieser ist.

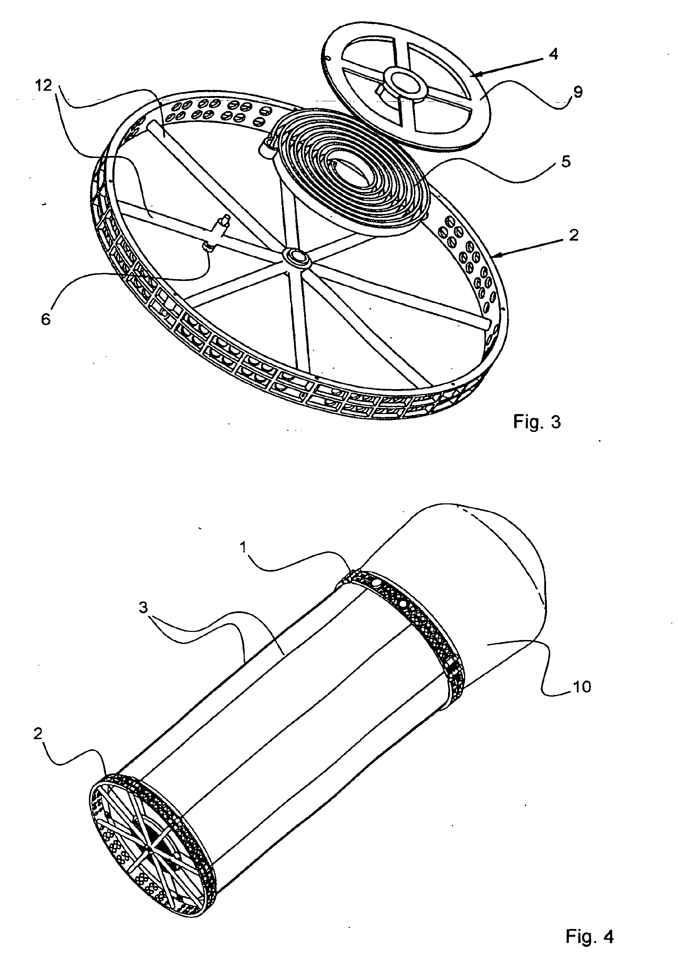

In dem in Fig. 4 dargestellten Ruhezustand der Anordnung ist die Drehfeder 5 vorgespannt und durch den Sperrstift 6 gesichert. Zur Vorbereitung des Ausstoßvorgangs ist der Behälter 10 durch den Hauptring 1 in die Anordnung eingeschoben und so auf den Haltering 2 aufgesetzt, daß die Mitnehmerelemente 9 des Halteringes 2 mit den entsprechenden Aufnahmen am auszuwerfenden Behälter 10 in Eingriff gelangen. Der Behälter 10 wird dabei durch die Kugelrollen 8 in seiner zentrierten Position im Inneren des ersten Ringelementes 1 gehalten und die Hubmagnete 7 sind ausgefahren, um den Behälter 10 gegenüber diesem Ringelement 1 zu arretieren.

Durch Entfernen des Sperrstiftes 6 wird die Drehfeder 5 entsichert und die Zugseile 3 werden unter Spannung gebracht. In diesem Zustand erfolgt die Montage der gesamten Anordnung in einer entsprechenden, im Bild nicht dargestellten Halterung im Inneren des ausstoßenden Raumflugkörpers, beispielsweise der ATV-oder Progress-Kapsel, wobei das erste Ringelement 1 fest mit der Struktur dieses Raumflugkörpers verbunden wird.

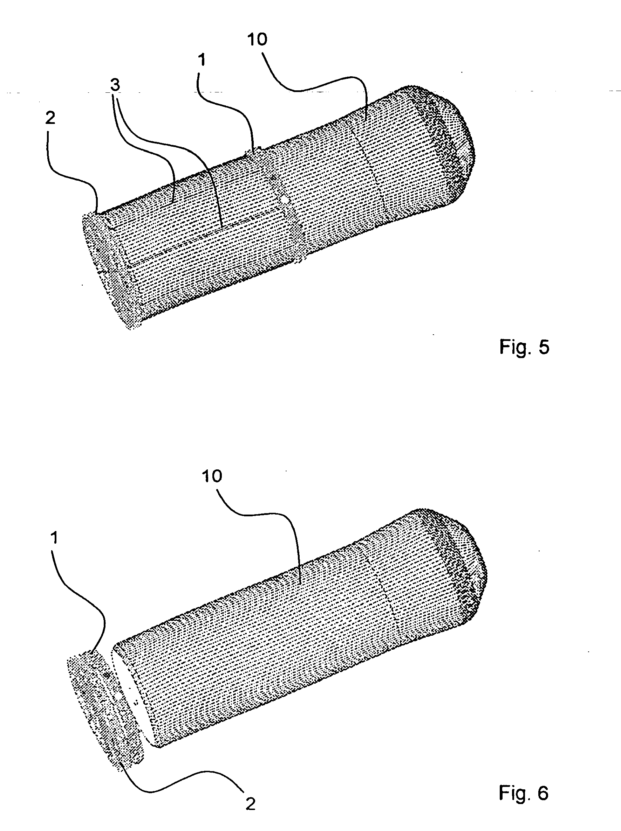

Der Start bzw. Ausstoßvorgang wird durch das Einfahren der Hubmagnete 7 initiiert, wodurch der Behälter 10 gegenüber dem Hauptring oder ersten Ringelement 1 freigegeben wird. Die auf dem zweiten Ringelement oder Haltering 2 zentral montierte Seilrolle 4 wird nun durch die Spiralfeder 5 in eine Rotationsbewegung versetzt, die über die Mitnehmerelemente 9 auf den Behälter 10 übertragen wird. Durch das gleichzeitige Aufrollen der Zugseile 3 wird zudem der gesamte Haltering 2 zusammen mit dem Behälter 10 in eine translatorische Bewegung in Richtung auf den Hauptring 1 versetzt und dadurch in einer Kombination aus einer Rotations- und einer Translationsbewegung aus dem Raumflugkörper ausgeworfen, so daß er drallstabilisiert zur Erde zurückkehren kann. Dieser Ausstoßvorgang ist in den Figuren 5 und 6 dargestellt. Fig. 6 zeigt dabei den Behälter 10 unmittelbar nach dem Verlassen der Anordnung der beiden Ringelemente 1 und 2, die nach dem Aufrollen der Zugseile 3 praktisch aneinanderliegen.

## Patentansprüche

1. Vorrichtung zum Auswurf von drallstabilisierten, in etwa zylindrisch ausgebildeten Behältern aus einem Raumflugkörper, wobei der auszustoßende Behälter über eine im Raumflugkörper anordbare Antriebseinheit in eine kombinierte Rotations- und Translationsbewegung versetzt wird und wobei Mittel zum Haltern und zum Führen des auszustoßenden Behälters vorgesehen sind, **dadurch gekennzeichnet, daß** die Antriebseinheit aus wenigstens zwei Ringelementen (1, 2) sowie aus verdrillbaren Zugseilen (3) besteht, deren Länge in etwa wenigstens der axialen Erstreckung des Behälters (10) entspricht, die zwischen den Ringelementen (1, 2) angeordnet sind und die jeweils mit ihrem einen Ende am ersten Ringelement (1) befestigt sind und deren andere Enden mit einer federbeaufschlagten, mit dem Behälter (10) lösbar verbindbaren Aufwickelvorrichtung (4, 5) verbunden sind, die am zweiten Ringelement (2) angeordnet ist, wobei die beiden Ringelemente (1, 2) zur Aufnahme des Behälters (10) in ihrem Inneren ausgebildet sind und wobei am ersten, mit der Struktur des Raumflugkörpers verbindbaren Ringelement (1) Halte-und Führungselemente (7, 8) für den Behälter (10) angeordnet sind.

2. Vorrichtung nach Anspruch 1, **dadurch gekennzeichnet, daß** die Aufwickelvorrichtungen aus einer im Zentrum des zweiten Ringelementes (2) angeordneten, über eine Spiralfeder (5) beaufschlagbaren Seilrolle (4) besteht.

3. Vorrichtung nach Anspruch 1 oder 2, **dadurch gekennzeichnet, daß** die Zugseile (3) über Umlenkvorrichtungen (13), die am Rand des zweiten Ringelementes (2) angeordnet sind, mit der Seilrolle (4) verbunden sind.

4. Vorrichtung nach einem der Ansprüche 1 bis 3, **dadurch gekennzeichnet, daß** die Halteelemente aus Hubmagneten (7) bestehen.

5. Vorrichtung nach einem der Ansprüche 1 bis 4, **dadurch gekennzeichnet, daß** die Führungselemente aus Kugelrollen (8) bestehen.

6. Vorrichtung nach einem der Ansprüche 1 bis 5, **dadurch gekennzeichnet, daß** die Zugseile (3) aus Drahtseilen bestehen.

7. Vorrichtung nach einem der Ansprüche 1 bis 6, **dadurch gekennzeichnet, daß** insgesamt acht zugseile (3) vorgesehen sind.

## Claims

1. Device for ejecting spin-stabilised containers of an approximately cylindrical design from a space flight body, whereby the container to be ejected is displaced in a combined rotating and translating motion by means of a drive unit disposed in the space flight body, and means are provided for retaining and guiding the container to be ejected, **characterised in that** the drive unit comprises at least two ring elements (1, 2) and twistable traction cables (3) disposed between the ring elements (1, 2), the length of which approximately corresponds to at least the axial extension of the container (10), and which are respectively attached by one of their ends to the first ring element (1) and by their other end to a spring biased reeling mechanism (4, 5) which is disposed on the second ring element (2) and can be releasably connected to the container (10), the two ring elements (1, 2) being designed to accommodate the container (10) in their interior, and retaining and guide elements (7, 8) for the container (10) are provided on the first ring element (1) which can be connected to the structure of the space flight body.

2. Device as claimed in claim 1, **characterised in that** the reeling mechanisms comprise a cable reel (4) disposed at the centre of the second ring element (2) to which pressure which can be applied by a coiled spring (5).

3. Device as claimed in claim 1 or 2, **characterised in that** the traction cables (3) are connected to the cable reel (4) by means of deflector devices (13) disposed at the edge of the second ring element (2).

4. Device as claimed in one of claims 1 to 3, **characterised in that** the retaining elements are lifting magnets (7).

5. Device as claimed in one of claims 1 to 4, **characterised in that** the guide elements are spherical rollers (8).

6. Device as claimed in one of claims 1 to 5, **characterised in that** the traction cables (3) are made from wire ropes.

7. Device as claimed in one of claims 1 to 6, **characterised in that** eight traction cables (3) are provided in total.

## Revendications

1. Dispositif pour l'éjection de réservoirs configurés de manière approximativement cylindrique, stabilisés par rotation, d'un engin spatial, le réservoir à éjecter étant déplacé dans un mouvement combiné de rotation et de translation par l'intermédiaire d'une unité d'entraînement pouvant être disposée dans l'engin spatial et des moyens étant prévus pour retenir et pour guider le réservoir à éjecter, **caractérisé en ce que** l'unité d'entraînement est constituée d'au moins deux éléments annulaires (1, 2) ainsi que de câbles de traction (3), dont la longueur correspond approximativement à l'étendue axiale du réservoir (10), qui sont disposés entre les éléments annulaires (1, 2) et qui sont respectivement fixés avec une de leurs extrémités au premier élément annulaire (1) et dont les autres extrémités sont reliées à un dispositif d'enroulement (4, 5) qui est actionné par ressort, peut être relié de manière détachable au réservoir (10) et est disposé sur le deuxième élément annulaire (2), les deux éléments annulaires (1, 2) étant configurés pour recevoir le réservoir (10) en leur sein et des éléments de retenue et de guidage (7, 8) pour le réservoir (10) étant disposés sur le premier élément annulaire (1) qui peut être relié à la structure de l'engin spatial.

2. Dispositif selon la revendication 1, **caractérisé en ce que** le dispositif d'enroulement est constitué d'un rouleau à câble (4) actionné par un ressort à boudin (5), disposé au centre du deuxième élément annulaire (2).

3. Dispositif selon la revendication 1 ou 2, **caractérisé en ce que** les câbles de traction (3) sont reliés au rouleau à câble (4) par l'intermédiaire de dispositifs de déviation (13) qui sont disposés sur le bord du deuxième élément annulaire (2).

4. Dispositif selon l'une des revendications 1 à 3, **caractérisé en ce que** les éléments de retenue sont constitués d'aimants de levage (7).

5. Dispositif selon l'une des revendications 1 à 4, **caractérisé en ce que** les éléments de guidage sont constitués de roulettes (8).

6. Dispositif selon l'une des revendications 1 à 5, **caractérisé en ce que** les câbles de traction (3) sont constitués de câbles métalliques.

7. Dispositif selon l'une des revendications 1 à 6, **caractérisé en ce que** huit câbles de traction (3) sont prévus au total.
